# EUROPEAN PATENT SPECIFICATION

(11) **EP 3 858 915 B1**
(45) Date of publication and mention of the grant of the patent: **13.05.2026**
(21) Application number: 19864335.5
(22) Date of filing: 20.09.2019
(51) Int. Cl.: C08L 55/02, C08L 25/12, C08L 25/16, C08L 63/00, C08L 23/28, C08K 3/22, C08F 279/04

(54) **THERMOPLASTIC RESIN COMPOSITION AND MOLDED PRODUCT USING SAME**
THERMOPLASTISCHE HARZZUSAMMENSETZUNG UND FORMPRODUKT DAMIT
COMPOSITION DE RÉSINE THERMOPLASTIQUE ET PRODUIT MOULÉ L'UTILISANT

(30) Priority: 28.09.2018 KR 20180116430
(43) Date of publication of application: 04.08.2021
(73) Proprietor: Lotte Chemical Corporation, Seoul, 05551 (KR)
(72) Inventor: HWANG, Donggeun, Uiwang-si, Gyeonggi-do 16073 (KR); CHOI, Woojin, Uiwang-si, Gyeonggi-do 16073 (KR); KWON, Keehae, Uiwang-si, Gyeonggi-do 16073 (KR); KIM, Younghyo, Uiwang-si, Gyeonggi-do 16073 (KR)
(74) Representative: Germain Maureau
(86) International application number: PCT/KR2019/012243
(87) International publication number: WO 2020/067681

(56) References cited:
- CN-A- 107 118 498
- KR-A- 20030 097 298
- KR-A- 20080 036 809
- KR-A- 20100 068 829
- KR-A- 20180 077 438
- KR-B1- 100 478 437
- KR-B1- 100 654 534
- US-A- 4 404 323
- US-A- 5 965 665
- US-A1- 2017 292 017

## Description

### BACKGROUND OF THE INVENTION

### (a) Field of the Invention

A thermoplastic resin composition and a molded product using the same are disclosed.

### (b) Description of the Related Art

Styrene-based resins represented by acrylonitrile-butadiene-styrene copolymer (ABS) resins are widely used in automobiles, home appliances, and OA devices due to excellent moldability, mechanical properties, appearance, secondary workability, and the like.

Molded products using the styrene-based resins may be widely applied to various products requiring painting/non-painting, for example, interior/exterior materials for automobiles and the like.

Recently, in Europe and elsewhere, a flame retardant standard for the interior/exterior materials for automobiles tends to be more reinforced in order to prevent damage to people caused by automobile fire accidents. For example, in Europe, like Regulation No. 118-03 and the like, a more reinforced flame retardant standard than the previous one is demanded.

Therefore, there is a need to develop a styrene-based resin capable of maintaining low lightness and excellent appearance while satisfying the reinforced flame retardant standard.

US 5,965,665 discloses a low gloss thermoplastic resin composition containing a rubber modified thermoplastic resin, a gel polymer and a low molecular weight polyolefin polymer which provides low surface gloss properties and improved impact properties.

US 4,404,323 discloses a heat resistant polymer composition based on one or more graft copolymers of styrene and acrylonitrile on a rubber and a copolymer of alpha-methylstyrene and acrylonitrile.

### SUMMARY OF THE INVENTION

### [Technical Problem]

A thermoplastic resin composition that satisfies a reinforced flame retardant standard while maintaining excellent low lightness and appearance, and a molded product using the same, are provided.

### [Technical Solution]

According to an embodiment, a thermoplastic resin composition includes 100 parts by weight of a base resin that includes (A) 20 wt% to 30 wt% of an acrylonitrile-butadiene-styrene graft copolymer wherein the average particle diameter of rubber polymer particles is 200 nm to 350 nm; (B) 15 wt% to 25 wt% of a branched styrene-acrylonitrile copolymer; (C) 25 wt% to 35 wt% of an acrylonitrile-butadiene-styrene copolymer resin wherein the average particle diameter of a rubber polymer is 1000 nm to 5000 nm; and (D) 10 wt% to 40 wt% of an alpha-methylstyrene-styrene-acrylonitrile copolymer having a weight average molecular weight of 50,000 g/mol to 250,000 g/mol, (E) 20 parts by weight to 30 parts by weight of a brominated epoxy resin, (F) 2 parts by weight to 8 parts by weight of antimony trioxide, (G) 1 part by weight to 5 parts by weight of a chlorinated polyethylene resin, and (H) 3 parts by weight to 6 parts by weight of a super high molecular-weight styrene-acrylonitrile copolymer having a weight average molecular weight of greater than or equal to 1,000,000 g/mol, wherein the average particle diameter is a Z-average particle diameter measured using a dynamic light scattering particle size analyzer.

**The** (A) acrylonitrile-butadiene-styrene graft copolymer wherein the average particle diameter of rubber polymer particles is 200 nm to 350 nm may have a core-shell structure including a core of a butadiene-based rubber polymer, and a shell formed by graft polymerization of acrylonitrile and styrene on the core.

**The** (B) branched styrene-acrylonitrile copolymer may have a polydispersity index (PDI) of greater than or equal to 3.

**The** (C) acrylonitrile-butadiene-styrene copolymer resin wherein the average particle diameter of a rubber polymer is 1000 nm to 5000 nm may include a dispersed phase of a core-shell structure including a core of a butadiene-based rubber polymer and a shell formed by graft polymerization of acrylonitrile and styrene on the core, and a continuous phase including a stryene-acrylonitrile.

**The** styrene-acrylonitrile copolymer constituting the styrene-acrylonitrile copolymer continuous phase may be an unbranched linear styrene-acrylonitrile copolymer.

Based on 100 wt% of an acrylonitrile-butadiene-styrene copolymer resin having an average particle diameter of (C) from 1000 nm to 5000 nm, the dispersed phase of the core-shell structure may be included in an amount of 10 wt% to 20 wt% and the styrene-acrylonitrile copolymer continuous phase may be included in an amount of 80 wt% to 90 wt%.

**The** (D) alpha-methylstyrene-styrene-acrylonitrile copolymer may be a copolymer of a monomer mixture including 50 wt% to 80 wt% of alpha-methylstyrene, 10 wt% to 50 wt% of acrylonitrile, and 0 wt% to 40 wt% of styrene.

The (H) super high molecular-weight styrene-acrylonitrile copolymer having a weight average molecular weight of greater than or equal to 1,000,000 g/mol may have a weight average molecular weight of 5,000,000 g/mol to 10,000,000 g/mol.

The (E) brominated epoxy resin may have a weight average molecular weight of 800 g/mol to 12,000 g/mol.

Based on 100 wt% of the (G) chlorinated polyethylene resin, chlorine may be included in an amount of 28 wt% to 40 wt%.

The thermoplastic resin composition may further include at least one additive selected from a nucleating agent, a coupling agent, a filler, a plasticizer, a lubricant, a release agent, an antibacterial agent, an antioxidant, an ultraviolet stabilizer, an antistatic agent, a pigment, and a dye.

Meanwhile, a molded product using a thermoplastic resin composition according to an embodiment may be provided.

The molded product may have a Vicat softening temperature of greater than or equal to 96 °C as measured under conditions of a 5 kg load and a temperature increase rate of 50 °C/h according to ISO 306 B50.

The molded product may have a flame retardancy of a V-1 grade or higher, measured according to UL94 standards.

The molded product may have glossiness of 60 GU or less as measured at 60° according to ASTM D523.

### [Advantageous Effects]

A thermoplastic resin composition according to an embodiment and a molded product using the same may maintain excellent low light characteristics and appearance as well as satisfy the more reinforced flame retardant standards than the previous ones and thus be widely applied to molding of various products used for painting and non-painting and particularly, automobile interior materials and the like.

### DETAILED DESCRIPTION OF THE EMBODIMENTS

Hereinafter, embodiments of the present invention are described in detail. However, these embodiments are exemplary, the present disclosure is not limited thereto and the present disclosure is defined by the scope of claims.

In the present invention, unless otherwise specified, the average particle diameter is a volume average diameter, and means a Z-average particle diameter measured using a dynamic light scattering analyzer.

According to an embodiment, a thermoplastic resin composition includes 100 parts by weight of a base resin that includes (A) 20 wt% to 30 wt% of an acrylonitrile-butadiene-styrene graft copolymer wherein the average particle diameter of rubber polymer particles is 200 nm to 350 nm; (B) 15 wt% to 25 wt% of a branched styrene-acrylonitrile copolymer; (C) 25 wt% to 35 wt% of an acrylonitrile-butadiene-styrene copolymer resin wherein the average particle diameter of a rubber polymer is 1000 nm to 5000 nm; and (D) 10 wt% to 40 wt% of an alpha-methylstyrene-styrene-acrylonitrile copolymer having a weight average molecular weight of 50,000 g/mol to 250,000 g/mol, (E) 20 parts by weight to 30 parts by weight of a brominated epoxy resin, (F) 2 parts by weight to 8 parts by weight of antimony trioxide, (G) 1 part by weight to 5 parts by weight of a chlorinated polyethylene resin, and (H) 3 parts by weight to 6 parts by weight of a super high molecular-weight styrene-acrylonitrile copolymer having a weight average molecular weight of greater than or equal to 1,000,000 g/mol, wherein the average particle diameter is a Z-average particle diameter measured using a dynamic light scattering particle size analyzer.

Hereinafter, each component of the thermoplastic resin composition is described in detail.

### (A) Acrylonitrile-butadiene-styrene Graft Copolymer wherein the Average Particle Diameter of Rubber Polymer Particles is 200 nm to 350 nm

In an embodiment, the (A) acrylonitrile-butadiene-styrene graft copolymer wherein the average particle diameter of rubber polymer particles is 200 nm to 350 nm imparts excellent impact resistance to the thermoplastic resin composition.

In an embodiment, the acrylonitrile-butadiene-styrene graft copolymer may have a core-shell structure including a core of a butadiene-based rubber polymer component and a shell formed by a graft copolymerization reaction of a mixture of acrylonitrile and styrene monomers to the rubber polymer around the core.

The acrylonitrile-butadiene-styrene graft copolymer may be prepared by adding styrene and acrylonitrile to a butadiene-based rubber polymer, and performing graft copolymerization through a conventional polymerization method such as emulsion polymerization and block polymerization.

The butadiene-based rubber polymer core may be included in an amount of 40 wt% to 60 wt% based on 100 wt% of the acrylonitrile-butadiene-styrene graft copolymer. Meanwhile, in the shell, the styrene-derived component and the acrylonitrile-derived component may be included in a weight ratio of 6:4 to 8:2.

The butadiene-based rubber polymer may be selected from a butadiene rubber polymer, a butadiene-styrene rubber polymer, a butadiene-acrylonitrile rubber polymer, a butadiene-acrylate rubber polymer, and a mixture thereof.

In the acrylonitrile-butadiene-styrene graft copolymer the rubber polymer may have an average particle diameter of, for example, 200 nm to 350 nm, for example, 250 nm to 300 nm. When the above range is satisfied, the thermoplastic resin composition may secure excellent impact resistance and appearance characteristics.

On the other hand, based on 100 wt% of the base resin, the acrylonitrile-butadiene-styrene graft copolymer may be included in an amount of greater than or equal to 20 wt%, for example, greater than or equal to 22 wt%, and for example, less than or equal to 30 wt%, less than or equal to 28 wt%, less than or equal to 26 wt%, , 20 wt% to 30 wt%, or 22 wt% to 28 wt%.

When the amount of the acrylonitrile-butadiene-styrene graft copolymer in the thermoplastic resin composition is less than 20 wt%, the thermoplastic resin composition may not achieve the intended mechanical properties, heat resistance, moldability, secondary processability, etc., while when it exceeds 30 wt%, the heat resistance of the thermoplastic resin composition may be deteriorated.

### (B) Branched Styrene-acrylonitrile Copolymer

In an embodiment, the (B) branched styrene-acrylonitrile copolymer may be prepared by modifying an unbranched linear styrene-acrylonitrile copolymer into a branched form, or may be prepared by using a polyfunctional initiator when copolymerizing styrene and acrylonitrile. Specifically, in an embodiment, a branched styrene-acrylonitrile copolymer having a polydispersity index (PDI) of greater than or equal to 3 may be used.

**The** branched styrene-acrylonitrile copolymer has excellent stretching characteristics, and thus may increase moldability of the thermoplastic resin composition, for example, sheet extrusion characteristics.

**In** an embodiment, an acrylonitrile-derived component may be included in an amount of 20 wt% to 30 wt% based on 100 wt% of the branched styrene-acrylonitrile copolymer. In addition, the branched styrene-acrylonitrile copolymer may have a weight average molecular weight of 300,000 g/mol to 500,000 g/mol.

Meanwhile, the branched styrene-acrylonitrile copolymer may include two or more different branched styrene-acrylonitrile copolymers. Thereby, moldability of the thermoplastic resin composition may be further improved.

On the other hand, based on 100 wt% of the base resin, the branched styrene-acrylonitrile copolymer may be included in an amount of greater than or equal to 15 wt%, for example, greater than or equal to 20 wt%, and for example, less than or equal to 25 wt%, less than or equal to 23 wt%, 15 wt% to 25 wt%, or 20 wt% to 23 wt%.

When the amount of the branched styrene-acrylonitrile copolymer in the thermoplastic resin composition is less than 15 wt%, the moldability of the thermoplastic resin composition may be deteriorated, while when it exceeds 25 wt%, a balance between properties of the thermoplastic resin composition may be broken.

### (C) Acrylonitrile-butadiene-styrene Copolymer Resin wherein Average Particle Diameter of Rubbery Polymer is 1000 nm to 5000 nm

In an embodiment, the (C) acrylonitrile-butadiene-styrene copolymer resin wherein the average particle diameter of a rubber polymer is 1000 nm to 5000 nm may include a dispersed phase of a core-shell structure including a core of a butadiene-based rubber polymer and a shell formed by graft polymerization of acrylonitrile and styrene on the core, and a continuous phase including a stryene-acrylonitrile.

In an embodiment, the acrylonitrile-butadiene-styrene copolymer resin imparts excellent impact resistance and low light characteristics to the thermoplastic resin composition.

The acrylonitrile-butadiene-styrene copolymer resin may be prepared through suspension or block polymerization of three components of a butadiene-based rubber polymer, acrylonitrile, and styrene.

The styrene-acrylonitrile copolymer constituting the styrene-acrylonitrile copolymer continuous phase may be an unbranched linear styrene-acrylonitrile copolymer.

The butadiene-based rubber polymer may be selected from a butadiene rubber polymer, a butadiene-styrene rubber polymer, a butadiene-acrylonitrile rubber polymer, a butadiene-acrylate rubber polymer, and a mixture thereof.

In the acrylonitrile-butadiene styrene copolymer resin, the rubber polymer may have an average particle diameter of, for example, 1000 nm to 5000 nm, 1000 nm to 4000 nm, or 1000 nm to 3000 nm.

The unbranched linear styrene-acrylonitrile copolymer constituting the continuous phase may have a weight average molecular weight of, for example, 50,000 g/mol to 250,000 g/mol, 50,000 g/mol to 200,000 g/mol, 50,000 g/mol to 150,000 g/mol, or 50,000 g/mol to 100,000 g/mol.

Based on 100 wt% of the base resin, the acrylonitrile-butadiene-styrene copolymer resin may be included in an amount of greater than or equal to 25 wt%, and for example, less than or equal to 35 wt%, less than or equal to 30 wt%, 25 wt% to 35 wt%, or 25 wt% to 30 wt%.

Meanwhile, based on 100 wt% of the acrylonitrile-butadiene-styrene copolymer resin, the dispersed phase of a core-shell structure may be included in an amount of 10 wt% to 20 wt%, and the styrene-acrylonitrile copolymer (unbranched linear styrene-acrylonitrile copolymer) continuous phase may be included in an amount of 80 wt% to 90 wt%.

When the amount of the acrylonitrile-butadiene-styrene copolymer resin in the thermoplastic resin composition is less than 25 wt%, the impact resistance and low light characteristics of the thermoplastic resin composition may be deteriorated, and when it exceeds 35 wt%, a balance between properties of the thermoplastic resin composition may be broken.

### (D) Alpha-methylstyrene-styrene-acrylonitrile copolymer

In an embodiment, the (D) alpha-methylstyrene-styrene-acrylonitrile copolymer may improve the heat resistance of the thermoplastic resin composition.

In an embodiment, the alpha-methylstyrene-styrene-acrylonitrile copolymer may be a copolymer of a monomer mixture including 50 wt% to 80 wt% of alpha-methylstyrene. In an embodiment, the alpha-methylstyrene-styrene-acrylonitrile copolymer may be a copolymer of a monomer mixture including 50 wt% to 80 wt% of alpha-methylstyrene, 10 wt% to 50 wt% of acrylonitrile, and 0 wt% to 40 wt% of styrene.

The weight average molecular weight of the alpha-methylstyrene-styrene-acrylonitrile copolymer is 50,000 g/mol to 250,000 g/mol, for example 100,000 g/mol to 250,000 g/mol, or 100,000 g/mol to 200,000 g/mol.

In an embodiment, the alpha-methylstyrene-styrene-acrylonitrile copolymer may be prepared using a conventional preparation method, for example, emulsion polymerization, suspension polymerization, solution polymerization, and bulk polymerization.

The alpha-methylstyrene-styrene-acrylonitrile copolymer is included in an amount of greater than or equal to 10 wt%, for example greater than or equal to 20 wt%, greater than or equal to 25 wt%, less than or equal to 40 wt%, less than or equal to 35 wt%, less than or equal to 30 wt%, 10 wt% to 40 wt%, 20 wt% to 35 wt%, 25 wt% % to 35 wt%, or 25 wt% to 30 wt%, based on 100 wt% of the base resin.

When the amount of the alpha-methylstyrene-styrene-acrylonitrile copolymer is less than 10 wt%, the heat resistance of the thermoplastic resin composition may be deteriorated, while when it exceeds 40 wt%, the impact resistance and appearance characteristics of the thermoplastic resin composition may be deteriorated.

### (E) Brominated Epoxy Resin

In an embodiment, the (E) brominated epoxy resin imparts flame retardancy to the thermoplastic resin composition. The brominated epoxy resin may be, for example, represented by Chemical Formula 1, but the present invention is not limited thereto, and various known brominated epoxy resins may be used.

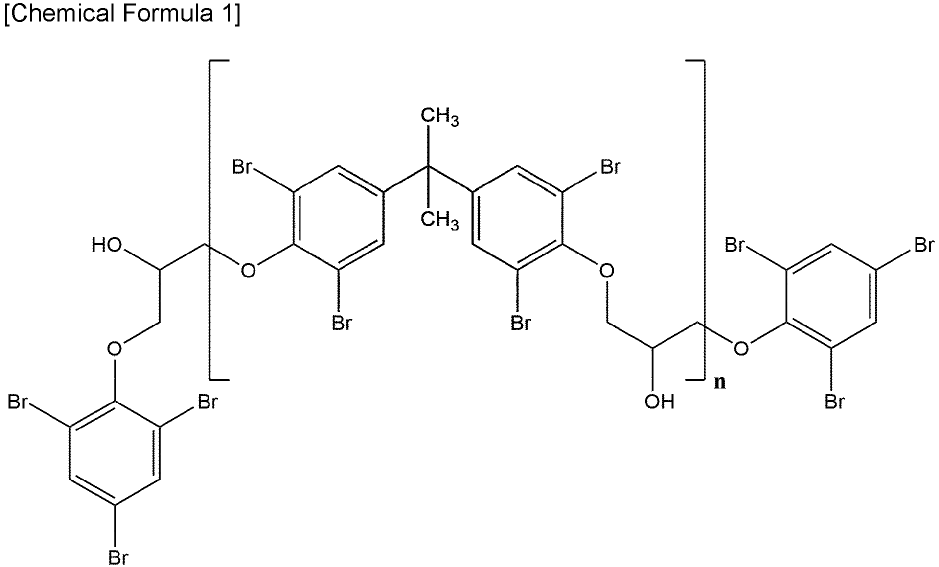

**In** Chemical Formula 1, n is an integer of 0 to 20.

**In** an embodiment, the weight average molecular weight of the brominated epoxy resin may be, for example, 800 g/mol to 12,000 g/mol, or 1000 g/mol to 5000 g/mol.

Based on 100 parts by weight of the base resin, the brominated epoxy resin may be included in an amount of, for example, greater than or equal to at least 20 parts by weight, less than or equal to 30 parts by weight, or less than or equal to 25 parts by weight, and for example, 20 parts by weight to 30 parts by weight, or 20 parts by weight to 25 parts by weight.

When the amount of the brominated epoxy resin in the thermoplastic resin composition is less than 20 parts by weight, an effect of improving the flame retardancy of the thermoplastic resin composition is insignificant, while when it exceeds 30 parts by weight, the flame retardancy of the thermoplastic resin composition may be improved, but impact resistance may be lowered.

### (F) Antimony Trioxide

In an embodiment, the (F) antimony trioxide (Sb₂O₃) may improve the flame retardancy of the thermoplastic resin composition by causing a synergistic action with the aforementioned brominated epoxy resin.

The antimony trioxide may have a specific gravity of, for example, 5.0 g/cm³ to 6.0 g/cm³, or 5.4 g/cm³ to 5.7 g/cm³.

The antimony trioxide may have an average particle diameter (D50) of, for example, 1 µm to 10 µm, 1 µm to 5 µm, or 1 µm to 3 µm.

Based on 100 parts by weight of the base resin, the antimony trioxide may be included in an amount of, for example, greater than or equal to 2 parts by weight, or greater than or equal to 3 parts by weight, and for example, less than or equal to 8 parts by weight, less than or equal to 7 parts by weight, less than or equal to 6 parts by weight, less than or equal to 5 parts by weight, for example, 2 parts by weight to 8 parts by weight, or 2 parts by weight to 5 parts by weight.

When the amount of antimony trioxide in the thermoplastic resin composition is less than 2 parts by weight, it is difficult to expect improved flame retardancy through a synergistic effect with the brominated epoxy resin, while when it exceeds 8 parts by weight, other physical properties excluding flame retardancy of the thermoplastic resin composition may be unintentionally deteriorated.

### (G) Chlorinated Polyethylene Resin

In an embodiment, the (G) chlorinated polyethylene resin not only improves the impact resistance of the thermoplastic resin composition and prevents dripping of combustibles during combustion, but also improves the flame retardancy of the thermoplastic resin composition together with a brominated epoxy resin and antimony trioxide.

In an embodiment, based on 100 wt% of the chlorinated polyethylene resin, chlorine may be included, for example, at 28 wt% to 40 wt%. When the chlorine content is less than 28 wt%, the flame retardancy of the thermoplastic resin composition may be deteriorated. On the other hand, when the chlorine content exceeds 40 wt%, the thermal stability of the thermoplastic resin composition may be impaired.

Based on 100 parts by weight of the base resin, the chlorinated polyethylene resin may be included in an amount of, for example, greater than or equal to 1 part by weight, or greater than or equal to 2 parts by weight, and for example, less than or equal to 5 parts by weight, or less than or equal to 4 parts by weight, and for example, 1 part by weight to 5 parts by weight, or 2 parts by weight to 4 parts by weight.

When the amount of the chlorinated polyethylene resin in the thermoplastic resin composition is less than 1 part by weight, dripping prevention and flame retardancy of the thermoplastic resin composition may be deteriorated, while when it exceeds 5 parts by weight, the thermal stability of the thermoplastic resin composition may be deteriorated.

### (H) Super High Molecular-weight Styrene-acrylonitrile Copolymer Having Weight Average Molecular Weight of Greater Than or Equal to 1,000,000 g/mol

In an embodiment, the (H) super high molecular-weight styrene-acrylonitrile copolymer having a weight average molecular weight of greater than or equal to 1,000,000 g/mol may improve low light characteristics and sheet extrusion characteristics of the thermoplastic resin composition.

The super high molecular-weight styrene-acrylonitrile copolymer according to an embodiment may desirably have a weight average molecular weight of greater than or equal to at least 1,000,000 g/mol. Specifically, a styrene-acrylonitrile copolymer having a weight average molecular weight of 5,000,000 g/mol to 10,000,000 g/mol, 5,000,000 g/mol to 9,000,000 g/mol, 5,000,000 g/mol to 8,000,000 g/mol, 5,000,000 g/mol to 7,000,000 g/mol, or 5,000,000 g/mol to 6,000,000 g/mol may be used.

The super high molecular-weight styrene-acrylonitrile copolymer according to an embodiment may be included in an amount of, for example, 3 parts by weight to 6 parts by weight, 3 parts by weight to 5 parts by weight, or 3 parts by weight to 4 parts by weight based on 100 parts by weight of a base resin.

If the super high molecular-weight styrene-acrylonitrile copolymer is included at less than 3 parts by weight, the effect of improving the low light characteristics of the thermoplastic resin composition cannot be exhibited, while when it exceeds 6 parts by weight, moldability and productivity of the thermoplastic resin composition may be lowered.

### (I) Other Additives

In addition to the components (A) to (H), the thermoplastic resin composition according to an embodiment may further include one or more additives in order to balance physical properties under conditions of excellently maintaining flame retardancy, low lightness, and appearance characteristics, or depending on the end use of the thermoplastic resin composition.

Specifically, the additive may be a nucleating agent, a coupling agent, a filler, a plasticizer, a lubricant, a release agent, an antibacterial agent, an antioxidant, an ultraviolet stabilizer, an antistatic agent, a pigment, or a dye, and these may be used alone or in combination of two or more.

These additives may be appropriately included within a range that does not impair the physical properties of the thermoplastic resin composition, and specifically, may be included in an amount of less than or equal to 20 parts by weight based on 100 parts by weight of a base resin, but is not limited thereto.

The thermoplastic resin composition according to the present invention may be prepared by a known method for preparing a thermoplastic resin composition.

For example, the thermoplastic resin composition according to the present invention may be prepared in the form of pellets by simultaneously mixing the constituents of the present invention and other additives and then melt-kneading the mixture in an extruder.

A molded product according to an embodiment of the present invention may be manufactured from the aforementioned thermoplastic resin composition.

In an embodiment, the molded product may have a Vicat softening temperature of greater than or equal to 96 °C, for example greater than or equal to 97 °C, or greater than or equal to 98 °C, as measured under conditions of a 5 kg load and a temperature increase rate of 50 °C/h according to ISO 306 B50.

In an embodiment, the molded product may have a flame retardancy of V-1 grade or higher, measured according to UL94 standards.

In an embodiment, the molded product may have glossiness of 60 GU or less, for example 50 GU or less, as measured at 60° according to ASTM D523.

The thermoplastic resin composition satisfies high flame retardant standards and exhibits excellent appearance characteristics and low lightness and thus may be widely applied to various products used for painting or non-painting, and particularly, automobile interior materials and the like requiring excellent appearance characteristics and low lightness.

Hereinafter, the present invention is illustrated in more detail with reference to examples and comparative examples. However, the following examples and comparative examples are provided for the purpose of descriptions and the present invention is not limited thereto.

### Examples 1 and 2 and Comparative Examples 1 to 4

The thermoplastic resin compositions according to Examples 1 and 2 and Comparative Examples 1 to 4 were prepared according to each component content ratio shown in Table 1.

In Table 1, (A), (B), (C), and (D) included in a base resin are expressed by wt% based on a total weight of the base resin, and (E), (F), (G), and (H) also included in the base resin are expressed by parts by weight based on 100 parts by weight of the base resin.

The components shown in Table 1 were dry-mixed, and then quantitatively and continuously injected into a supply section of a twin-screw extruder (L/D = 36, φ = 45 mm) and fused/kneaded. Subsequently, the pelletized thermoplastic resin compositions through the twin-screw extruder were dried at about 80 °C for about 4 hours, and then prepared into a 2 mm-thick specimens for evaluating flame retardancy and a 3 mm-thick specimen for evaluating other properties by using a 6 oz injection molding machine set at a cylinder temperature of about 220 °C and a mold temperature of about 60 °C.

**(Table 1)**

| | | Unit | Ex. 1 | Ex. 2 | Comp. Ex. 1 | Comp. Ex. 2 | Comp. Ex. 3 | Comp. Ex. 4 |
|---|---|---|---|---|---|---|---|---|
| Base resin | (A) | wt% | 24 | 24 | 24 | 24 | 24 | 24 |
| | (B) | wt% | 21 | 16 | 46 | 21 | 26 | 46 |
| | (C) | wt% | 30 | 30 | 30 | 25 | 20 | - |
| | (D) | wt% | 25 | 30 | - | 30 | 30 | 30 |
| (E) | | parts by weight | 23.0 | 23.0 | 25.5 | 25.5 | 23.0 | 25.5 |
| (F) | | parts by weight | 3.5 | 3.5 | 5.0 | 5.0 | 3.5 | 5.0 |
| (G) | | parts by weight | 3.0 | 3.0 | 3.0 | 3.0 | 3.0 | 3.0 |
| (H) | | parts by weight | 4.0 | 3.5 | 5.0 | - | 4.0 | 4.0 |

Each component provided in Table 1 is illustrated as follows.

### (A) Acrylonitrile-butadiene-styrene graft copolymer wherein the average particle diameter of rubber polymer particles is 200 nm to 350 nm

An acrylonitrile-butadiene-styrene graft copolymer having about 58 wt% of a core formed of a butadiene rubber polymer (an average particle diameter: about 250 nm) and a shell formed by graft polymerization of acrylonitrile and styrene on the core (Lotte Advanced Materials Co., Ltd.).

### (B) Branched styrene-acrylonitrile copolymer

A branched styrene-acrylonitrile copolymer copolymerized from a monomer mixture of about 71 wt% of styrene and about 29 wt% of acrylonitrile and having a weight average molecular weight of about 350,000 g/mol and a polydispersity index of about 3.3 (Lotte Advanced Materials Co., Ltd.).

### (C) Acrylonitrile-butadiene-styrene copolymer resin wherein the average particle diameter of a rubber polymer is 1000 nm to 5000 nm

An acrylonitrile-butadiene-styrene copolymer resin having about 16 wt% of a dispersed phase of a core-shell structure including a core formed of a butadiene rubber polymer having an average particle diameter of about 2000 nm and a shell formed of a styrene-acrylonitrile copolymer and 84 wt% of a continuous phase of the styrene-acrylonitrile copolymer (which had a weight average molecular weight of about 70,000 g/mol and was an unbranched linear styrene-acrylonitrile copolymer) (Lotte Advanced Materials Co., Ltd.)

### (D) Alpha-methylstyrene-styrene-acrylonitrile copolymer

An alpha-methylstyrene-styrene-acrylonitrile copolymer copolymerized from a monomer mixture including about 19 wt% of styrene, about 27 wt% of acrylonitrile, and about 54 wt% of alpha-methylstyrene and having a weight average molecular weight of about 150,000 g/mol (Lotte Advanced Materials Co., Ltd.)

### (E) Brominated epoxy resin

A brominated epoxy resin having a weight average molecular weight of about 1700 g/mol (EC-20, Dainippon Ink and Chemicals Co., Ltd.)

### (F) Antimony trioxide

Antimony trioxide having specific gravity of about 5.5 g/cm³ and an average particle diameter (D50) of about 1.5 µm (Jeil Chemical Co., Ltd.)

### (G) Chlorinated polyethylene resin

A chlorinated polyethylene resin including chlorine in an amount of about 32 wt% (IM 450, Sundow Polymers Co., Ltd.)

### (H) Super high molecular-weight styrene-acrylonitrile copolymer having a weight average molecular weight of greater than or equal to 1,000,000 g/mol

A super high molecular-weight styrene-acrylonitrile copolymer having a weight average molecular weight of 5,000,000 g/mol to 6,000,000 g/mol (ZB-869, Zibo Huaxing Additives Co., Ltd.)

### Experimental Examples

Experiment results are shown in Table 2.
(1) Heat resistance (°C): According to ISO 306 B50, the Vicat softening temperature (VST) was measured under conditions of a 5 kg load and a temperature increase rate of 50 °C/h.
(2) Low light characteristics (GU): Glossiness was measured at 60° according to ASTM D523.
(3) Flame retardancy: The flame retardancy of a 2 mm thick specimen was measured according to UL94 standards.
(4) Appearance: The surface of a specimen for evaluating properties was observed using a microscope. Specifically, the number of appearance defects such as foreign matters, pin holes, and the like in a reference area of 100 mm (width) x 100 mm (length) x 3 mm (thickness) was measured and evaluated according to the following criteria.

⊚: **No** appearance defects were observed
○: 10 or less appearance defects were observed.
△: 10 to 20 appearance defects were observed
X: More than 20 appearance defects were observed

**(Table 2)**

| | Ex. 1 | Ex. 2 | Comp. Ex. 1 | Comp. Ex. 2 | Comp. Ex. 3 | Comp. Ex. 4 |
|---|---|---|---|---|---|---|
| Heat resistance | 98 | 99 | 93 | 99 | 99 | 99 |
| Low light characteristics | 50 | 50 | 50 | 65 | 70 | 80 |
| Flame retardancy | V-1 | V-1 | V-0 | V-0 | V-1 | V-0 |
| Appearance | ⊚ | ○ | ⊚ | X | ⊚ | ⊚ |

Referring to Tables 1 and 2, Examples 1 and 2 used the acrylonitrile-butadiene-styrene graft copolymer, the branched styrene-acrylonitrile copolymer, the acrylonitrile-butadiene-styrene copolymer resin, the alpha-methylstyrene-styrene-acrylonitrile copolymer, the brominated epoxy resin, the antimony trioxide, the chlorinated polyethylene resin, and the super high molecular-weight styrene-acrylonitrile copolymer in optimal amounts and thus provided a thermoplastic resin composition simultaneously having excellent flame retardancy, low light characteristics, and appearance characteristics, compared with the comparative examples and a molded product using the same.

## Claims

1. A thermoplastic resin composition, comprising
100 parts by weight of a base resin comprising:
(A) 20 wt% to 30 wt% of an acrylonitrile-butadiene-styrene graft copolymer wherein the average particle diameter of rubber polymer particles is 200 nm to 350 nm;
(B) 15 wt% to 25 wt% of a branched styrene-acrylonitrile copolymer;
(C) 25 wt% to 35 wt% of an acrylonitrile-butadiene-styrene copolymer resin wherein the average particle diameter of a rubber polymer is 1000 nm to 5000 nm; and
(D) 10 wt% to 40 wt% of an alpha-methylstyrene-styrene-acrylonitrile copolymer having a weight average molecular weight of 50,000 g/mol to 250,000 g/mol,
(E) 20 parts by weight to 30 parts by weight of a brominated epoxy resin,
(F) 2 parts by weight to 8 parts by weight of antimony trioxide,
(G) 1 part by weight to 5 parts by weight of a chlorinated polyethylene resin, and
(H) 3 parts by weight to 6 parts by weight of a super high molecular-weight styrene-acrylonitrile copolymer having a weight average molecular weight of greater than or equal to 1,000,000 g/mol,
wherein the average particle diameter is a Z-average particle diameter measured using a dynamic light scattering particle size analyzer.

2. **The** thermoplastic resin composition of claim 1, wherein
the (A) acrylonitrile-butadiene-styrene graft copolymer wherein the average particle diameter of rubber polymer particles is 200 nm to 350 nm has a core-shell structure comprising
a core of a butadiene-based rubber polymer component, and
a shell formed by a graft copolymerization reaction of acrylonitrile and styrene to the rubber polymer around the core.

3. **The** thermoplastic resin composition of claim 1 or claim 2, wherein the (B) branched styrene-acrylonitrile copolymer has a polydispersity index (PDI) of greater than or equal to 3.

4. **The** thermoplastic resin composition of any one of claim 1 to claim 3, wherein
the (C) acrylonitrile-butadiene-styrene copolymer resin wherein the average particle diameter of a rubber polymer is 1000 nm to 5000 nm comprises
a dispersed phase of a core-shell structure comprising a core of a butadiene-based rubber polymer and a shell formed by graft polymerization of acrylonitrile and styrene on the core, and
a continuous phase including an unbranched linear stryene-acrylonitrile.

5. **The** thermoplastic resin composition of claim 4, wherein
based on 100 wt% of the acrylonitrile-butadiene-styrene copolymer resin,
the dispersed phase of a core-shell structure is included in an amount of 10 wt% to 20 wt%, and the continuous phase including the styrene-acrylonitrile copolymer is included in an amount of 80 wt% to 90 wt%.

6. **The** thermoplastic resin composition of any one of claim 1 to claim 5, wherein the (D) alpha-methylstyrene-styrene-acrylonitrile copolymer is a copolymer of a monomer mixture comprising 50 wt% to 80 wt% of alpha-methylstyrene, 10 wt% to 50 wt% of acrylonitrile, and more than 0 wt% and equal to or less than 40 wt% of styrene.

7. **The** thermoplastic resin composition of any one of claim 1 to claim 6, wherein the (H) super high molecular-weight styrene-acrylonitrile copolymer having a weight average molecular weight of greater than or equal to 1,000,000 g/mol has a weight average molecular weight of 5,000,000 g/mol to 10,000,000 g/mol.

8. **The** thermoplastic resin composition of any one of claim 1 to claim 7, wherein the (E) brominated epoxy resin has a weight average molecular weight of 800 g/mol to 12,000 g/mol.

9. **The** thermoplastic resin composition of any one of claim 1 to claim 8, wherein based on 100 wt% of the (G) chlorinated polyethylene resin, chlorine is included in an amount of 28 wt% to 40 wt%.

10. **The** thermoplastic resin composition of any one of claim 1 to claim 9, wherein the thermoplastic resin composition further comprises at least one additive selected from a nucleating agent, a coupling agent, a filler, a plasticizer, a lubricant, a release agent, an antibacterial agent, an antioxidant, an ultraviolet stabilizer, an antistatic agent, a pigment, and a dye.

11. A molded product using a thermoplastic resin composition of any one of claims 1 to 10.

12. The molded product of claim 11, wherein a Vicat softening temperature is greater than or equal to 96 °C as measured under conditions of a 5 kg load and a temperature increase rate of 50 °C/h according to ISO 306 B50.

13. The molded product of claim 11 or claim 12, wherein flame retardancy is V-1 grade or higher, measured according to UL94 standards.

14. The molded product of any one of claim 11 to claim 13, wherein glossiness is 60 GU or less as measured at 60° according to ASTM D523.

## Patentansprüche

1. Thermoplastische Harzzusammensetzung, umfassend
100 Gewichtsteile eines Basisharzes, umfassend:
(A) 20 Gew.-% bis 30 Gew.-% eines Acrylnitril-Butadien-Styrol-Pfropfcopolymers, wobei der durchschnittliche Partikeldurchmesser von Gummipolymerpartikeln 200 nm bis 350 nm beträgt;
(B) 15 Gew.-% bis 25 Gew.-% eines verzweigten Styrol-Acrylnitril-Copolymers;
(C) 25 Gew.-% bis 35 Gew.-% eines Acrylnitril-Butadien-Styrol-Copolymerharzes, wobei der durchschnittliche Partikeldurchmesser eines Gummipolymers 1000 nm bis 5000 nm beträgt; und
(D) 10 bis 40 Gew.-% eines aromatischen Vinyl-Vinylcyanid-Copolymers, das ein gewichtsdurchschnittliches Molekulargewicht von 50.000 g/mol bis 250.000 g/mol aufweist;
(E) 20 Gewichtsteile bis 30 Gewichtsteile eines bromierten Epoxidharzes,
(F) 2 Gewichtsteile bis 8 Gewichtsteile Antimontrioxid,
(G) 1 Gewichtsteil bis 5 Gewichtsteile eines chlorierten Polyethylenharzes, und
(H) 3 Gewichtsteile bis 6 Gewichtsteile eines superhochmolekularen Styrol-Acrylonitril-Copolymers, das ein gewichtsdurchschnittliches Molekulargewicht von mehr als oder gleich 1.000.000 g/mol aufweist,
wobei der durchschnittliche Partikeldurchmesser ein Z-durchschnittlicher Partikeldurchmesser ist, der unter Verwendung eines dynamischen Lichtstreuanalysators gemessen wird.

2. Thermoplastische Harzzusammensetzung nach Anspruch 1, wobei
das (A) Acrylnitril-Butadien-Styrol-Pfropfcopolymer, wobei der durchschnittliche Partikeldurchmesser von Gummipolymerpartikeln 200 nm bis 350 nm beträgt, eine Kern-Schalen-Struktur aufweist, umfassend
einen Kern aus einer Gummipolymerkomponente auf Butadienbasis, und
eine Schale, die durch eine Pfropfcopolymerisationsreaktion von Acrylnitril und Styrol mit dem Gummipolymer um den Kern gebildet wird.

3. Thermoplastische Harzzusammensetzung nach Anspruch 1 oder 2, wobei das (B) verzweigte Styrol-Acrylonitril-Copolymer einen Polydispersitätsindex (PDI) von größer oder gleich 3 aufweist.

4. Thermoplastische Harzzusammensetzung nach einem der Ansprüche 1 bis 3, wobei
das (C) Acrylnitril-Butadien-Styrol-Copolymerharz, wobei der durchschnittliche Partikeldurchmesser eines Gummipolymers 1000 nm bis 5000 nm beträgt,
eine dispergierte Phase einer Kern-Schalen-Struktur umfasst, die einen Kern aus einem Gummipolymer auf Butadienbasis und eine Schale umfasst, die durch Pfropfpolymerisation von Acrylnitril und Styrol auf dem Kern gebildet wird, und
eine kontinuierliche Phase einschließlich eines unverzweigten linearen Stryol-Acrylnitrils.

5. Thermoplastische Harzzusammensetzung nach Anspruch 4, wobei
auf Basis von 100 Gew.-% des Acrylnitril-Butadien-Styrol-Copolymerharzes,
die dispergierte Phase einer Kern-Schalen-Struktur in einer Menge von 10 Gew.-% bis 20 Gew.-% eingeschlossen ist, und die kontinuierliche Phase einschließlich des Styrol-Acrylnitril-Copolymers in einer Menge von 80 Gew.-% bis 90 Gew.-% eingeschlossen ist.

6. Thermoplastische Harzzusammensetzung nach einem der Ansprüche 1 bis 5, wobei das (D) Alpha-Methylstyrol-Styrol-Acrylnitril-Copolymer ein Copolymer einer Monomermischung ist, die 50 Gew.-% bis 80 Gew.-% Alpha-Methylstyrol, 10 Gew.-% bis 50 Gew.-% Acrylnitril und mehr als 0 Gew.-% und gleich oder weniger als 40 Gew.-% Styrol umfasst.

7. Thermoplastische Harzzusammensetzung nach einem der Ansprüche 1 bis 6, wobei das (H) superhochmolekulare Styrol-Acrylonitril-Copolymer mit einem gewichtsdurchschnittlichen Molekulargewicht von mehr als oder gleich 1.000.000 g/mol ein gewichtsdurchschnittliches Molekulargewicht von 5.000.000 g/mol bis 10.000.000 g/mol aufweist.

8. Thermoplastische Harzzusammensetzung nach einem von Anspruch 1 bis Anspruch 7, wobei das (E) bromierte Epoxidharz ein gewichtsdurchschnittliches Molekulargewicht von 800 g/mol bis 12.000 g/mol aufweist.

9. Thermoplastische Harzzusammensetzung nach einem der Ansprüche 1 bis 8, wobei auf Basis von 100 Gew.-% des (G) chlorierten Polyethylenharzes Chlor in einer Menge von 28 Gew.-% bis 40 Gew.-% eingeschlossen ist.

10. Thermoplastische Harzzusammensetzung nach einem der Ansprüche 1 bis 9, wobei die thermoplastische Harzzusammensetzung ferner mindestens einen Zusatzstoff enthält, der aus einem Keimbildner, einem Haftvermittler, einem Füllstoff, einem Weichmacher, einem Gleitmittel, einem Trennmittel, einem antibakteriellen Mittel, einem Antioxidationsmittel, einem UV-Stabilisator, einem Antistatikum, einem Pigment und einem Farbstoff ausgewählt ist.

11. Formprodukt unter Verwendung der thermoplastischen Harzzusammensetzung nach einem von Anspruch 1 bis Anspruch 10.

12. Formprodukt nach Anspruch 11, wobei eine Vicat-Erweichungstemperatur größer oder gleich 96 °C ist, gemessen unter Bedingungen einer Last von 5 kg und einer Temperaturanstiegsrate von 50 °C/h nach ISO 306 B50.

13. Formprodukt nach Anspruch 11 oder 12, wobei die Flammwidrigkeit Klasse V-1 oder höher ist, gemessen nach den UL94-Normen.

14. Formprodukt nach einem der Ansprüche 11 bis 13, wobei der Glanzgrad 60 GU oder weniger beträgt, gemessen bei 60° nach ASTM D523.

## Revendications

1. Composition de résine thermoplastique, comprenant
100 parties en poids d'une résine de base comprenant :
(A) 20% en poids à 30% en poids d'un copolymère greffé acrylonitrile-butadiène-styrène dans lequel le diamètre de particule moyen des particules de polymère caoutchouteux est compris entre 200 nm et 350 nm ;
(B) 15% en poids à 25% en poids d'un copolymère styrène-acrylonitrile ramifié ;
(C) 25% en poids à 35% en poids d'une résine de copolymère acrylonitrile-butadiène-styrène dans laquelle le diamètre de particule moyen d'un polymère caoutchouteux est compris entre 1000 nm et 5000 nm ; et
(D) 10% en poids à 40% en poids d'un copolymère alpha-méthylstyrène-styrène-acrylonitrile ayant un poids moléculaire moyen en poids compris entre 50000 g/mol et 250000 g/mol,
(E) 20 parties en poids à 30 parties en poids d'une résine époxy bromée,
(F) 2 parties en poids à 8 parties en poids de trioxyde d'antimoine,
(G) 1 partie en poids à 5 parties en poids d'une résine de polyéthylène chloré, et
(H) 3 parties en poids à 6 parties en poids d'un copolymère styrène-acrylonitrile de très haut poids moléculaire ayant un poids moléculaire moyen en poids supérieur ou égal à 1000000 g/mol,
dans laquelle le diamètre de particule moyen est un diamètre de particule moyen en Z mesuré en utilisant un analyseur de taille de particule par diffusion dynamique de lumière.

2. Composition de résine thermoplastique selon la revendication 1, dans laquelle
le copolymère greffé acrylonitrile-butadiène-styrène (A) dans lequel le diamètre de particule moyen des particules de polymère caoutchouteux est compris entre 200 nm et 350 nm a une structure noyau-enveloppe comprenant
un noyau d'un composant polymère caoutchouteux à base de butadiène, et
une enveloppe formée par une réaction de copolymérisation par greffage d'acrylonitrile et de styrène sur le polymère caoutchouteux autour du noyau.

3. Composition de résine thermoplastique selon la revendication 1 ou la revendication 2, dans laquelle le copolymère styrène-acrylonitrile ramifié (B) a un indice de polydispersité (PDI) supérieur ou égal à 3.

4. Composition de résine thermoplastique selon l'une quelconque des revendications 1 à 3, dans laquelle
la résine de copolymère acrylonitrile-butadiène-styrène (C) dans laquelle le diamètre de particule moyen d'un polymère caoutchouteux est compris entre 1000 nm et 5000 nm comprend
une phase dispersée de structure noyau-enveloppe comprenant un noyau d'un polymère caoutchouteux à base de butadiène et une enveloppe formée par polymérisation par greffage d'acrylonitrile et de styrène sur le noyau, et
une phase continue comprenant un styrène-acrylonitrile linéaire non ramifié.

5. Composition de résine thermoplastique selon la revendication 4, dans laquelle
par rapport à 100% en poids de la résine de copolymère acrylonitrile-butadiène-styrène,
la phase dispersée d'une structure noyau-enveloppe est incluse en une quantité de 10% à 20% en poids, et la phase continue comprenant le copolymère styrène-acrylonitrile est incluse en une quantité de 80% à 90% en poids.

6. Composition de résine thermoplastique selon l'une quelconque des revendications 1 à 5, dans laquelle le copolymère alpha-méthylstyrène-styrène-acrylonitrile (D) est un copolymère d'un mélange de monomères comprenant 50% en poids à 80% en poids d'alpha-méthylstyrène, 10% en poids à 50% en poids d'acrylonitrile, et plus de 0% en poids et au plus 40% en poids de styrène.

7. Composition de résine thermoplastique selon l'une quelconque des revendications 1 à 6, dans laquelle le copolymère styrène-acrylonitrile de très haut poids moléculaire (H) ayant un poids moléculaire moyen en poids supérieur ou égal à 1000000 g/mol a un poids moléculaire moyen en poids compris entre 5000000 g/mol et 10000000 g/mol.

8. Composition de résine thermoplastique selon l'une quelconque des revendications 1 à 7, dans laquelle la résine époxy bromée (E) a un poids moléculaire moyen en poids compris entre 800 g/mol et 12000 g/mol.

9. Composition de résine thermoplastique selon l'une quelconque des revendications 1 à 8, dans laquelle, par rapport à 100% en poids de la résine de polyéthylène chloré (G), le chlore est inclus en une quantité de 28% en poids à 40% en poids.

10. Composition de résine thermoplastique selon l'une quelconque des revendications 1 à 9, dans laquelle la composition de résine thermoplastique comprend en outre au moins un additif choisi parmi un agent de nucléation, un agent de couplage, une charge, un plastifiant, un lubrifiant, un agent de démoulage, un agent antibactérien, un antioxydant, un stabilisant ultraviolet, un agent antistatique, un pigment et un colorant.

11. Produit moulé utilisant une composition de résine thermoplastique selon l'une quelconque des revendications 1 à 10.

12. Produit moulé selon la revendication 11, dans lequel la température de ramollissement Vicat est supérieure ou égale à 96°C, telle que mesurée dans des conditions d'une charge de 5 kg et d'une vitesse d'augmentation de température de 50°C/h selon la norme ISO 306 B50.

13. Produit moulé selon la revendication 11 ou la revendication 12, dans lequel l'ininflammabilité est de classe V-1 ou supérieure, mesurée selon les normes UL94.

14. Produit moulé selon l'une quelconque des revendications 11 à 13, dans lequel la brillance est inférieure ou égale 60 GU, telle que mesurée à 60° selon la norme ASTM D523.
